# EUROPÄISCHE PATENTANMELDUNG

(11) **EP 1 028 029 A2**
(43) Veröffentlichungstag der Anmeldung: **16.08.2000**
(21) Anmeldenummer: 00102445.4
(22) Anmeldetag: 04.02.2000
(51) Int. Cl.: B60R 1/06

(54) **Befestigungsvorrichtung für einen Kraftfahrzeug-Rückspiegel**

(30) Priorität: 10.02.1999 DE 19905545
(71) Anmelder: MEKRA Lang GmbH & Co. KG, 90765 Fürth (DE)
(72) Erfinder: Lang, Heinrich, 91465 Ergersheim (DE); Popp, Albrecht, 91629 Weihenzell (DE)
(74) Vertreter: Winter, Brandl, Fürniss, Hübner, Röss, Kaiser, Polte Partnerschaft

(57) **Zusammenfassung**

Eine Befestigungsvorrichtung für einen Kraftfahrzeug-Rückspiegel, insbesondere Außenspiegel, mit einem fahrzeugseitigen, am Fahrzeug befestigbaren Grundteil (4) und einer ein Spiegelgehäuse haltenden Spiegelhalterung (6), welche mit dem Grundteil (4) mittels wenigstens einem Befestigungselement verbindbar ist, zeichnet sich dadurch aus, daß zwischen Grundteil (4) und Spiegelhalterung (6) eine Haltevorrichtung (32) angeordnet ist, welche die Spiegelhalterung (6) gegenüber dem Grundteil (4) ohne Einwirkung des wenigstens einen Befestigungselementes festlegt. Hierdurch sind auch große und schwere Spiegel problemlos durch eine einzige Person montierbar, da diese nach dem Festlegen mittels der Haltevorrichtung beide Hände zum endgültigen Befestigen, z.B. Anschrauben frei hat.

## Beschreibung

Die Erfindung betrifft eine Befestigungsvorrichtung für einen Kraftfahrzeug-Rückspiegel, insbesondere Außenspiegel, nach dem Oberbegriff des Anspruches 1.

Kraftfahrzeug-Rückspiegel werden für gewöhnlich an einem Karosserieteil eines Fahrzeuges derart befestigt, daß ein Grundteil und eine ein Spiegelgehäuse haltende Spiegelhalterung vorgesehen werden, welche mit dem Grundteil mittels wenigstens einem Befestigungselement verbindbar ist. Das Grundteil wiederum wird dann am Karosserieteil des Fahrzeuges befestigt. Die Befestigung des Grundteils am Fahrzeug erfolgt in aller Regel durch eine oder mehrere Schrauben und die Verbindung zwischen Grundteil und Spiegelhalterung erfolgt in aller Regel dadurch, daß das wenigstens eine Befestigungselement ebenfalls eine Schraube ist.

Bei der Befestigung von Kraftfahrzeug-Rückspiegeln mit großen Abmessungen, beispielsweise bei der Befestigung von Rückspiegeln für Lkws oder Omnibusse, entsteht das Problem, daß aufgrund der vergleichsweise großen Abmessungen und insbesondere des relativ großen Gewichts derartige Rückspiegel in aller Regel nicht mehr von einer Person am Fahrzeug befestigt werden können. Für gewöhnlich werden daher derart groß bauende Rückspiegel von zwei Personen montiert, wobei eine Person den Spiegel hält und gegenüber fahrzeugseitigen Befestigungsbohrungen etc. ausrichtet und die andere Person den eigentlichen Befestigungsvorgang durch das Eindrehen einer oder mehrerer Schrauben durchführt.

Dieser Vorgang ist somit personalintensiv und damit teuer und verlangt, daß die beiden Personen, welche das Montageteam bilden, gut aufeinander eingespielt sind.

Demgegenüber hat es sich die vorliegende Erfindung zur Aufgabe gemacht, eine Befestigungsvorrichtung für einen Kraftfahrzeug-Rückspiegel so auszugestalten, daß der Rückspiegel im Zuge der Montage auch von einer einzigen Person schnell und ermüdungsfrei an dem Kraftfahrzeug-Karosserieteil befestigt werden kann.

Zur Lösung dieser Aufgabe schlägt die vorliegende Erfindung gemäß Anspruch 1 vor, daß zwischen dem Grundteil und der Spiegelhalterung eine Haltevorrichtung angeordnet ist, welche die Spiegelhalterung gegenüber dem Grundteil ohne Einwirkung des wenigstens einen Befestigungselementes, mit welchem Spiegelhalterung und Grundteil normalerweise miteinander verbunden werden, festlegt.

Durch den Gegenstand der vorliegenden Erfindung wird somit der den Rückspiegel montierenden Person eine Montagehilfe derart an die Hand gegeben, daß diese Person den Rückspiegel auch alleine befestigen kann. Hierzu wird der Rückspiegel zunächst über die Haltevorrichtung an dem Montageort, d.h. der betreffenden Stelle der Fahrzeugkarosserie, festgelegt. Art und Anordnung der Haltevorrichtung sind hierbei derart, daß der Rückspiegel nach erfolgter Festlegung über die Haltevorrichtung zunächst auch ohne Einwirkung eines oder mehrerer Befestigungselemente, beispielsweise Schrauben, an dem Karosserieteil hält, so daß die den Rückspiegel montierende Person nach dem Festlegen des Rückspiegels über die Haltevorrichtung wieder beide Hände frei zur Endmontage, beispielsweise zum Einführen und Festdrehen von Befestigungsschrauben oder dergleichen, hat. Auf eine zweite Person, welche während des eigentlichen Befestigungsvorganges den Rückspiegel in ausgerichteter Lage zu dem Karosserieteil hält, kann somit verzichtet werden bzw. diese zweite Person steht für andere Aufgaben zur Verfügung, beispielsweise zum zeitgleichen Montieren eines zweiten Außenspiegels an der gegenüberliegenden Fahrzeugseite, so daß die Montagezeiten verkürzt werden können.

Bevorzugt hält die Haltevorrichtung die Spiegelhalterung formschlüssig gegenüber dem Grundteil. Formschlußverbindungen sind konstruktiv einfach, im Gebrauch jedoch zuverlässig und erlauben ein rasches Festlegen des Rückspiegels bzw. seiner Spiegelhalterung an dem Grundteil durch einfache Handgriffe.

Bevorzugt weist die Haltevorrichtung einen am Grundteil angeordneten und von diesem abstehenden Fanghaken auf, an welchem die Spiegelhalterung einhängbar ist. Genausogut kann aber auch die Haltevorrichtung einen an der Spiegelhalterung angeordneten und von dieser abstehenden Fanghaken aufweisen, der dann an dem Grundteil einhängbar ist. In beiden Ausgestaltungsformen wird gewährleistet, daß die Spiegelhalterung rasch und zuverlässig an dem Grundteil durch einen einfachen Einhängvorgang festgelegt werden kann.

Der Fanghaken weist in einer bevorzugten Ausführungsform einen hohlzylindrischen Körper und einen von diesem radial abstehenden endseitigen Hakenflansch auf, wobei der Spiegelhalter eine Aufnahmeöffnung aufweist, in welcher der Körper des Fanghakens aufnehmbar ist und welche eine Hinterschneidung zur Festlegung des Hakenflansches aufweist. Dies stellt eine konstruktiv einfache, aber im Gebrauch sehr zuverlässige Ausgestaltung der Haltevorrichtung dar.

In einer anderen Ausführungsform kann der Fanghaken einen hohlzylindrischen Körper und einen von diesem radial abstehenden endseitigen Hakenflansch aufweisen, wobei das Grundteil eine Aufnahmeöffnung aufweist, in welcher der Körper des Fanghakens aufnehmbar ist und welche eine Hinterschneidung zur Festlegung des Hakenflansches aufweist.

Ist hierbei der Hakenflansch am Fanghaken in seiner umfangsseitigen Erstreckung und ist die Hinterschneidung in ihrer umfangsseitigen Erstreckung auf einen Umfangsbereich von weniger als 180° beschränkt, ergibt sich eine automatische formschlüssige Ausrichtung der Spiegelhalterung gegenüber dem Grundteil, so daß die den Rückspiegel montierende Person nach erfolgter Festlegung des Rückspiegels über den Fanghaken und die Aufnahmeöffnung sicher sein kann, daß weitere, in der Spiegelhalterung und dem Grundteil vorhandene Befestigungsbohrungen miteinander in Fluchtung zur Aufnahme entsprechender Befestigungselemente sind.

In einer weiteren bevorzugten Ausführungsform kann das Grundteil eine Gewindebohrung aufweisen, über der der hohlzylindrische Körper derart angeordnet ist, daß seine Längsmittelachse mit derjenigen der Gewindebohrung fluchtet, wobei die Spiegelhalterung eine Durchgangsöffnung aufweist, deren Längsmittelachse bei an dem Fanghaken aufgehängter Spiegelhalterung mit denjenigen von Fanghaken-Körper und Gewindebohrung fluchtet. Hierdurch kann in vorteilhafter Weise die Durchgangsbohrung in dem hohlzylindrischen Körper des Fanghakens zur Aufnahme eines Befestigungselementes dienen, welches die Durchgangsöffnung in der Spiegelhalterung durchsetzt und in die Gewindebohrung seitens des Grundteils einschraubbar ist.

In einer weiteren Ausführungsform kann der Körper des Fanghakens ein Außengewinde aufweisen, welches in ein entsprechendes Innengewinde entweder seitens des Grundteils oder seitens der Spiegelhalterung einschraubbar ist. Weiterhin weist dann der Fanghaken-Körper in seiner inneren Durchgangsbohrung ein Innengewinde auf, welches dann zum Aufnehmen eines Befestigungselementes dient, mit welchem Grundteil und Spiegelhalterung miteinander verbindbar sind.

Weitere Einzelheiten, Aspekte und Vorteile der vorliegenden Erfindung ergeben sich aus der nachfolgenden Beschreibung einer Ausführungsform anhand der Zeichnung.

Es zeigt:
Fig. 1 eine auseinandergezogene perspektivische Darstellung einer erfindungsgemäßen Befestigungsvorrichtung gemäß einer Ausführungsform der vorliegenden Erfindung; und
Fig. 2 einen gegenüber Fig. 1 vergrößerten Vertikalschnitt durch Spiegelhalterung, Grundteil und Haltevorrichtung im montierten Zustand.

In der nachfolgenden Beschreibung, welche unter Bezugnahme auf die Zeichnung erfolgt, ist eine Ausführungsform dargestellt, bei der die Haltevorrichtung zum vorläufigen oder vorübergehenden Festlegen von Grundteil und Spiegelhalterung seitens des Grundteils angeordnet oder anordenbar ist; es versteht sich, daß eine kinematische bzw. konstruktive Umkehr gleichermaßen möglich ist, bei der die Haltevorrichtung seitens der Spiegelhalterung angeordnet ist. Die nachfolgenden Erläuterungen hinsichtlich technischer Merkmale und der sich ergebenden Vorteile treffen gleichermaßen auf beide Ausgestaltungsmöglichkeiten oder Ausführungsformen zu.

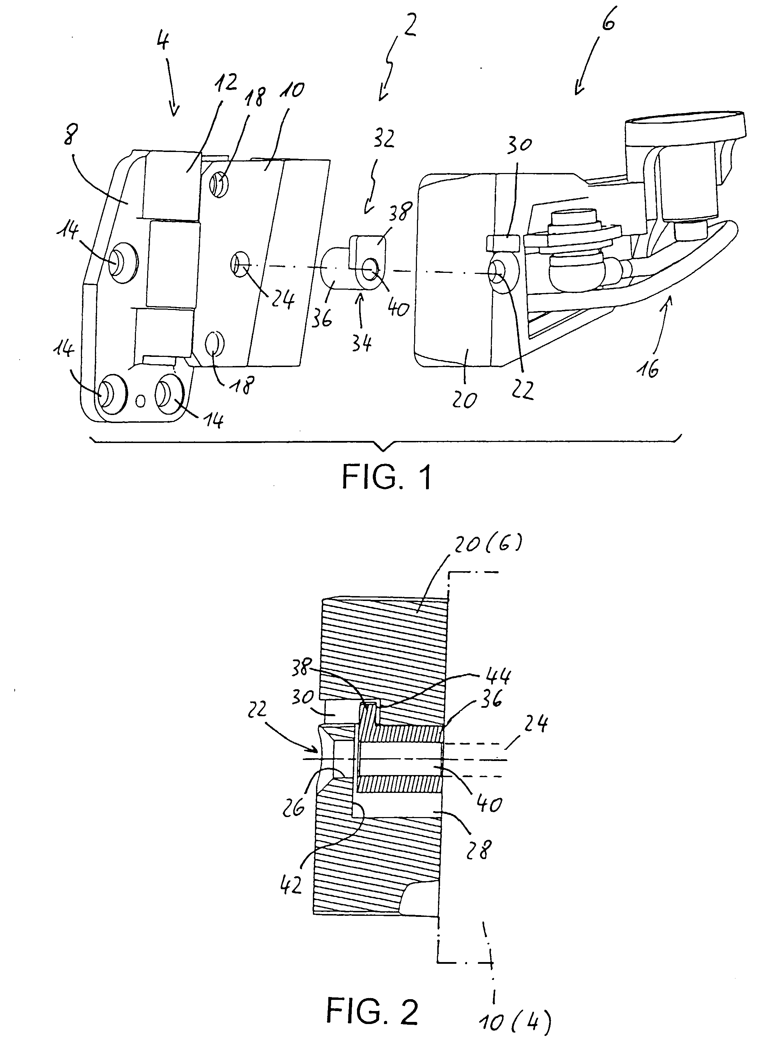

Gemäß Fig. 1 umfaßt eine insgesamt mit 2 bezeichnete Befestigungsvorrichtung im wesentlichen ein fahrzeug- oder karosserieseitiges Grundteil 4 sowie eine Spiegelhalterung 6. Das Grundteil 4 ist im dargestellten Ausführungsbeispiel in bekannter Weise als Scharnier ausgebildet mit einem ersten Scharnierelement 8 und einem zweiten Scharnierelement 10, welche über eine Drehverbindung 12 dreh- oder schwenkbar miteinander verbunden sind. Das erste Scharnierelement 8 ist an der Fahrzeugkarosserie befestigbar und weist hierzu eine Mehrzahl von Durchgangsbohrungen 14 auf, welche zur Aufnahme entsprechender Befestigungsmittel, beispielsweise Schrauben oder dergleichen, dienen. Das zweite Scharnierelement trägt im dargestellten Ausführungsbeispiel zum einen die Spiegelhalterung 6, und weiterhin ist an diesem zweiten Scharnierelement 10 die Tür des Kraftfahrzeugs angeschlagen. Wie beispielsweise bei Lastkraftwagen bekannt ist, schwenkt somit bei einem Öffnen oder Schließen der an dem zweiten Scharnierelement 10 angeschlagenen Tür die Spiegelhalterung 6 entsprechend mit.

Die Spiegelhalterung 6 trägt in bekannter Weise einen Lagermechanismus 16, an dem ein in Fig. 1 nicht dargestelltes Spiegelgehäuse befestigt ist.

Die Befestigung des Grundteiles 4 mit der Spiegelhalterung 6 erfolgt über eine Mehrzahl von Befestigungselementen, beispielsweise Schrauben, welche von der in Fig. 1 rückwärtigen Seite des zweiten Scharnierelementes 10 dort ausgebildete Durchgangsbohrungen 18 durchsetzen und in entsprechenden Gewindelöchern in einem Halteabschnitt 20 der Spiegelhalterung 6 eingeschraubt werden. Weiterhin weist der Halteabschnitt 20 eine Durchgangsbohrung 22 auf, welche bei korrekt montierter Spiegelhalterung 6 in Fluchtung mit einer Bohrung 24 ist, die in dem zweiten Scharnierelement 10 zwischen den beiden Bohrungen 18 ausgebildet ist. Die Bohrung 22 dient zur Aufnahme eines weiteren Befestigungselementes, beispielsweise einer Schraube von der Außenseite des Halteabschnittes 20 her, wobei dann diese Halteschraube in einem entsprechenden Gewinde hinter oder in der Bohrung 24 in Eingriff bringbar ist.

Gemäß Fig. 2 ist die Durchgangsbohrung 22 seitens des Halteabschnittes 20 bzw. der Spiegelhalterung 6 nicht über ihre gesamte Länge hinweg von gleichem Durchmesser bzw. Querschnitt. Nach einem vergleichsweise kurzen Abschnitt 26 kleineren Durchmessers erweitert sich die Durchgangsbohrung 22 in einen Abschnitt 28 großen Durchmessers, der darüber hinaus zu der gestrichelt dargestellten Längsmittelachse des Abschnittes 26 exzentrisch angeordnet ist. Weiterhin ist gemäß den Figuren. 1 und 2 oberhalb der Durchgangsbohrung 22 ein Einstich 30 in das Material des Halteabschnittes 20 eingebracht, der sich über die Längserstreckung des Abschnittes 26 kleinen Durchmessers hinaus in das Innere des Halteabschnittes 20 hinein erstreckt und in der aus Fig. 2 ersichtlichen Weise mit dem Inneren des Abschnittes 28 großen Durchmessers in Verbindung steht. Der Einstich 30 kann beispielsweise rechteckförmige Formgebung haben, wie aus Fig. 1 hervorgeht.

Zwischen dem Grundteil 4 und der Spiegelhalterung 6 bzw. zwischen dem zweiten Scharnierelement 10 und dem Halteabschnitt 20 ist eine Haltevorrichtung 32 angeordnet. Diese Haltevorrichtung 32 besteht im wesentlichen aus einem Fanghaken 34 mit einem hohlzylindrischen Körper 36 und einem endseitig von diesem Körper 36 radial abstehenden Hakenflansch 38. Der Fanghaken-Körper 36 und der Hakenflansch 38 sind bevorzugt einstückig ausgebildet, sie können jedoch auch aus zwei separaten Bauelementen zusammengesetzt, beispielsweise zusammengeschweißt, werden. In Längsrichtung wird der Körper 36 des Fanghakens 34 von einer Durchgangsbohrung 40 durchsetzt.

Der Hakenflansch 38 erstreckt sich in Radialrichtung nicht allseitig oder geschlossen umfangsseitig von dem Körper 36 aus nach außen, sondern ist in Umfangsrichtung begrenzt derart, daß seine umfangsseitige Erstreckung unter 180° liegt. Im in Fig. 1 ersichtlichen Ausführungsbeispiel hat der Hakenflansch 38 eine im wesentlichen rechteckförmige Formgebung, wobei die Breite des Flansches 38 der Breite des Einstiches 30 im wesentlichen entspricht bzw. etwas geringer ist als diese.

Das vom Hakenflasch 38 abgewandte Ende des Körpers 36 wird auf seiten des zweiten Scharnierelementes 10 so befestigt, daß die Längsmittelachse der Bohrung 24 und die Längsmittelachse der Bohrung 40 in Fluchtung sind. Hierzu kann der Körper 36 des Fanghakens 34 im Bereich der Bohrung 24 an dem zweiten Scharnierelement 10 angeschweißt werden.

Weitere Befestigungsmöglichkeiten für den Körper 36 im Bereich der Bohrung 24 wären ein Einpressen in eine entsprechend dimensionierte Aufnahmeöffnung oder das einstückige Ausbilden von Scharnierelement 10 und Körper 36 z.B. in Form eines Kunststoff-Spritzgußteiles oder eines Aluminium-Druckgußteiles. Eine weitere Ausführungsmöglichkeit besteht darin, am Außenumfang des Körpers 36 ein Gewinde auszubilden, welches dann mit einem Innengewinde in einer entsprechenden Aufnahmebohrung seitens des Scharnierelementes 10 in Eingriff steht, so daß der Körper 36 mit dem Scharnierelement verschraubt werden kann.

In jedem Fall erfolgt die Befestigung des Fanghakens 34 an dem Grundteil 4 derart, daß nach erfolgter Befestigung oder Ausbildung des Fanghakens 34 der Hakenflansch 38 nach oben weist.

Wie bereits erwähnt, ist auch eine kinematische oder konstruktive Umkehr möglich, bei der der Fanghaken 34 seitens des Halteabschnittes 20 in der Spiegelhalterung 6 befestigt wird.

Der Abschnitt 28 großen Durchmessers und der Einstich 30 in dem Halteabschnitt 20 bilden zusammen eine Aufnahmeöffnung zur Aufnahme des Fanghakens 34. Die Exzentrizität des Abschnittes 28 großen Durchmessers zu der Längsmittelachse der Durchgangsbohrung 22 ist hierbei derart, daß der Fanghaken 34 mit dem Hakenflansch 38 in den Abschnitt 28 großen Durchmessers eingeführt werden kann, bis die Stirnseite des Fanghakens 34, an der der Hakenflansch 38 radial vorspringt, an einer Innenwand 42 des Abschnittes 28 großen Durchmessers anschlägt, wie in Fig. 2 ersichtlich. Ein Absenken der Spiegelhalterung 6 bzw. des Halteabschnittes 20 gegenüber dem Grundteil 4 bzw. dem dortigen zweiten Scharnierelement 10 bewirkt dann, daß der Hakenflansch 38 in der aus Fig. 2 ersichtlichen Weise in den Einstich 30 eintritt und der Halteabschnitt 20 auf einem oberen Umfangs-Teilabschnitt des Körpers 36 des Fanghakens 34 aufsitzt.

Der Einstich 30 bildet somit zusammen mit dem Abschnitt 28 großen Durchmessers eine Hinterschneidung 44, welche von dem Hakenflansch 38 hintergriffen wird, so daß der Halteabschnitt 20 und damit die gesamte Spiegelhalterung 6 abziehfest an dem zweiten Scharnierelement 10 und damit dem Grundteil 4 festgelegt ist.

Aufgrund der im wesentlichen rechteckförmigen Ausgestaltung des Hakenflansches 38, welche nur mit geringem Spiel in den Einstich 30 paßt, ist die Festlegung des Halteabschnittes 20 an dem zweiten Scharnierelement 10 darüber hinaus verdrehsicher.

Wie am besten aus Fig. 2 hervorgeht, sind die Abmessungen des Abschnittes 28 großen Durchmessers, des Körpers 36, des Hakenflansches 38 und des Einstiches 30 derart gewählt, daß in der Endposition, in welcher der Halteabschnitt 20 auf dem Fanghaken 34 bzw. dessen Körper 36 aufsitzt, die Längsmittelachsen der Durchgangsbohrung 22, der Bohrung 40 im Körper 36 des Fanghakens und der Bohrung 24 im zweiten Scharnierelement 10 fluchten.

Zur Montage des Rückspiegels muß somit eine mit der Montage beauftragte Person lediglich die Spiegelhalterung 6 auf den vom Scharnierelement 2 vorstehenden Fanghaken 34 aufschieben. Hierzu wird der Fanghaken 34 in den Abschnitt 28 großen Durchmessers geschoben und, sobald der Anschlag an der Innenwand oder Stirnwand 42 erfolgt, kann die Spiegelhalterung 6 losgelassen werden. Der Halteabschnitt 20 rutscht unter Schwerkrafteinfluß etwas nach unten, so daß der Hakenflansch 38 die Hinterschneidung 44 hintergreift, wobei ggf. eine gewisse Selbstzentrierung zwischen Hakenflansch 38 und Einstich 30 erfolgt. Sobald der Hakenflansch 38 die Hinterschneidung 44 hintergriffen hat, ist gemäß Fig. 2 der Halteabschnitt 20 an dem zweiten Scharnierelement 10 abzieh- und drehsicher festgelegt, wobei die entsprechenden Längsmittelachsen von Durchgangsbohrung 22, Durchgangsbohrung 40 und Durchgangsbohrung 24 im wesentlichen fluchten.

Ist die Lage oder Position gemäß Fig. 2 erreicht, hält der Halteabschnitt 20 und damit die Spiegelhalterung 6 ohne weitere Hilfsmittel an dem Grundteil 4, und im Anschluß daran wird durch die Bohrungen 22 und 40 ein Befestigungselement, beispielsweise eine Schraube oder dergleichen, eingeführt und im Bereich der Bohrung 24 eingeschraubt, so daß der Halteabschnitt 20 gegen das zweite Scharnierelement 10 gezogen wird und befestigt wird. Danach werden von der Rückseite des zweiten Scharnierelementes 10 her durch die Bohrungen 18 weitere Befestigungselemente, beispielsweise Schrauben, eingeführt und mit entsprechenden Gewindeabschnitten im Halteabschnitt 20 verschraubt. Aufgrund der drehfesten Fixierung des Halteabschnittes 20 durch den Eingriff zwischen Hakenflansch 38 und Einstich 30 sind die Bohrungen 18 seitens des zweiten Scharnierelementes 10 ebenfalls in Fluchtung mit den entsprechenden Gegenbohrungen oder Gewindeabschnitten im Halteabschnitt 20, so daß die weitere Verschraubung rasch und ohne weitere Hilfsmittel oder ohne eine zweite Person erfolgen kann.

Durch den Gegenstand der vorliegenden Erfindung wird es somit einer einzelnen Person ermöglicht, auch große, schwere und sperrige Kraftfahrzeug-Rückspiegel, wie sie beispielsweise für Lastkraftwagen oder Omnibusse üblich sind, alleine ohne Unterstützung durch eine zweite Person zu montieren, da während des Einbringens des ersten Befestigungselementes, d.h. beispielsweise einer Schraube, durch die Bohrung 22 der Halteabschnitt 20 bzw. die Spiegelhalterung 6 nicht von Hand gegen das zweite Scharnierelement 10 bzw. das Grundteil 4 gedrückt und gehalten werden muß. Es genügt ein bloßes Einhängen des Halteabschnittes 20 an dem Fanghaken 34 der Haltevorrichtung 32, um den Halteabschnitt 20 und damit die Spiegelhalterung 6 gegenüber dem Grundteil 4 festzulegen. Für nachfolgende Manipulationen, beispielsweise für das Eindrehen einer Schraube durch die Bohrung 22 im Halteabschnitt 20, hat die die Montage durchführende Person wieder beide Hände frei.

Ist die Haltevorrichtung 32 mit dem Fanghaken 34 auf seiten des Halteabschnittes 20 angeordnet und befindet sich ein Äquivalent zu dem Abschnitt 28 großen Durchmessers und dem Einstich 30 seitens des Grundteiles 4, werden im wesentlichen die gleichen Abläufe durchgeführt und es ergeben sich im wesentlichen die gleichen Vorteile wie oben beschrieben.

In einer Modifikation kann - wie bereits weiter oben erwähnt - der Außenumfang des Körpers 36 mit einem Gewinde versehen sein, welches mit einem entsprechenden Innengewinde auf seiten des zweiten Scharnierelementes 10 in Eingriff steht. Im Inneren der Durchgangsbohrung 40 ist dann bevorzugt ein Innengewinde ausgebildet, welches mit einem Schraubbolzen oder dergleichen in Eingriff bringbar ist, der von der Durchgangsbohrung 22 im Halteabschnitt 20 hier eingeführt wird.

Es versteht sich, daß im Rahmen der vorliegenden Erfindung weitere Modifikationen oder Abwandlungen möglich sind, ohne hierbei von dem grundsätzlichen Gedanken der vorliegenden Erfindung abzuweichen. So ist beispielsweise die Formgebung des Hakenflansches 38 nicht auf die dargestellte Rechteckform beschränkt, sondern es sind auch hiervon abweichende Formgebungen, beispielsweise halbrunde Ausformungen oder dergleichen, möglich. Wesentlich ist nur, daß die Formgebung des Hakenflansches 38 und des Einstichs 30 verhindert, daß sich der Halteabschnitt 20, nachdem er an dem Fanghaken 34 aufgehängt worden ist, um die Längsmittelachse des Fanghakens 34 drehen kann. Weiterhin wäre es denkbar, bei besonders großen Rückspiegeln zwei oder noch mehr Fanghaken 34 zu verwenden. Bei der Verwendung von zwei oder mehr Fanghaken 34 ist der drehfeste Eingriff zwischen Hakenflansch 38 und Halteabschnitt 20 nicht mehr unbedingt erforderlich.

## Patentansprüche

1. Befestigungsvorrichtung für einen Kraftfahrzeug-Rückspiegel, insbesondere Außenspiegel, mit einem fahrzeugseitigen, am Fahrzeug befestigbaren Grundteil (4) und einer ein Spiegelgehäuse haltenden Spiegelhalterung (6), welche mit dem Grundteil (4) mittels wenigstens einem Befestigungselement verbindbar ist, dadurch gekennzeichnet, daß zwischen Grundteil (4) und Spiegelhalterung (6) eine Haltevorrichtung (32) angeordnet ist, welche die Spiegelhalterung (6) gegenüber dem Grundteil (4) ohne Einwirkung des wenigstens einen Befestigungselementes festlegt.

2. Befestigungsvorrichtung nach Anspruch 1, dadurch gekennzeichnet, daß die Haltevorrichtung (32) die Spiegelhalterung (6) formschlüssig gegenüber dem Grundteil (4) festlegt.

3. Befestigungsvorrichtung nach Anspruch 2, dadurch gekennzeichnet, daß die Haltevorrichtung (32) einen am Grundteil (4) anordenbaren und von diesem abstehenden Fanghaken (34) aufweist, an welchem die Spiegelhalterung (6) einhängbar ist.

4. Befestigungsvorrichtung nach Anspruch 2, dadurch gekennzeichnet, daß die Haltevorrichtung (32) einen an der Spiegelhalterung (6) angeordneten und von dieser abstehenden Fanghaken (34) aufweist, der an dem Grundteil (4) einhängbar ist.

5. Befestigungsvorrichtung nach Anspruch 3, dadurch gekennzeichnet, daß der Fanghaken (34) einen hohlzylindrischen Körper (36) und einen von diesem radial abstehenden endseitigen Hakenflansch (38) aufweist und daß die Spiegelhalterung (6) eine Aufnahmeöffnung (28) aufweist, in welcher der Körper (36) des Fanghakens (34) aufnehmbar ist und welche eine Hinterschneidung (44) zur Festlegung des Hakenflansches (38) aufweist.

6. Befestigungsvorrichtung nach Anspruch 4, dadurch gekennzeichnet, daß der Fanghaken (34) einen hohlzylindrischen Körper (36) und einen von diesem radial abstehenden endseitigen Hakenflansch (38) aufweist und daß das Grundteil (4) eine Aufnahmeöffnung aufweist, in welcher der Körper (36) des Fanghakens (34) aufnehmbar ist und welche eine Hinterschneidung zur Festlegung des Hakenflansches (38) aufweist.

7. Befestigungsvorrichtung nach Anspruch 5 oder 6, dadurch gekennzeichnet, daß der Hakenflansch (38) in seiner umfangsseitigen Erstreckung auf einen Umfangsbereich von weniger als 180° beschränkt ist und daß die Hinterschneidung (44) in ihrer umfangsseitigen Erstreckung ebenfalls auf einen Umfangsbereich von weniger als 180° beschränkt ist.

8. Befestigungsvorrichtung nach einem der Ansprüche 1 bis 7, dadurch gekennzeichnet, daß das Grundteil (4) eine Gewindebohrung (24) aufweist, über welcher der hohlzylindrische Körper (36) derart angeordnet ist, daß seine Längsmittelachse mit derjenigen der Gewindebohrung (24) fluchtet und daß die Spiegelhalterung (6) eine Durchgangsöffnung (22) aufweist, deren Längsmittelachse bei an dem Fanghaken (34) aufgehängter Spiegelhalterung (6) mit denjenigen von Fanghaken-Körper (36) und Gewindebohrung (24) fluchtet.

9. Befestigungsvorrichtung nach Anspruch 8, dadurch gekennzeichnet, daß in die Durchgangsbohrung (22) und durch den hohlzylindrischen Körper (36) eine Befestigungsschraube einführbar und in die grundteilseitige Gewindebohrung (24) einschraubbar ist.

10. Befestigungsvorrichtung nach einem der Ansprüche 1 bis 8, dadurch gekennzeichnet, daß der hohlzylindrische Körper (36) in das Grundteil (4) oder in die Spiegelhalterung (6) einschraubbar ist, wobei dann Spiegelhalterung (6) oder Grundteil (4) die Aufnahmeöffnung aufweist und wobei in dem hohlzylindrischen Körper (36) ein Innengewinde ausgebildet ist.
